# EUROPEAN PATENT SPECIFICATION

(11) **EP 1 655 337 B1**
(45) Date of publication and mention of the grant of the patent: **09.01.2008**
(21) Application number: 04026093.7
(22) Date of filing: 03.11.2004
(51) Int. Cl.: C08L 23/06, C08L 23/04, C08F 10/02, C08F 2/00

(54) **Multimodal polyethylene composition with improved homogeneity**
Multimodale Polyethylenzusammensetzung mit verbesserter Homogenität
Composition de polyéthylène multimodal avec homogénéité améliorée

(43) Date of publication of application: 10.05.2006
(73) Proprietor: Borealis Technology Oy, 06101 Porvoo (FI)
(72) Inventor: Bäckman, Mats, 416 51 Göteborg (SE); Van Praet, Erik, 3220 Holsbeek (BE); Gustafsson, Bill, 444 41 Stenungsund (SE); Van Marion, Remko, 06100 Porvoo (FI)
(74) Representative: Kador & Partner

(56) References cited:
- EP-A- 1 146 078
- EP-A- 1 460 105
- US-B1- 6 455 642
- US-B1- 6 545 093

## Description

The present invention concerns a multimodal, preferably bimodal, polyethylene composition comprising two ethylene homo- or copolymer fractions with different molecular weight having improved homogeneity. Furthermore, the present invention relates to a process for the production of such a composition as well as to the use of such a composition for the production of a pipe.

Multimodal polyethylene compositions are frequently used e.g. for the production of pipes due to their favourable physical and chemical properties as e.g. mechanical strength, corrosion resistance and long-term stability. When considering that the fluids, such as water or natural gas, transported in a pipe often are pressurized and have varying temperatures, usually within a range of 0°C to 50°C, it is obvious that the polyethylene composition used for pipes must meet demanding requirements.

For multimodal polymers comprising more than one polymer fraction with different molecular weight, homogeneity is known to be a critical property, because low degrees of homogeneity adversely affect e.g. the surface properties and other properties of the polymer composition. For obtaining a sufficient degree of homogeneity, mixing of the different fractions the composition is consisting of must be reached down to the microscopic scale.

When compounding multimodal polymer compositions e.g. for the production of pipes, so-called "white spots" occur in the compounded material. These white spots usually have a size of below 10 to about 50 micrometer and consist of high molecular weight polymer particles that have not been adequately compounded in the composition. Further, when compounding polymer compositions e.g. for the production of films, gel particles with a size of about 0.01 to 1 mm often occur. These gel particles also consist of high molecular weight polymer particles not adequately compounded and appear as disfiguring inhomogeneities in the finished film. Still further, inhomogeneities in multimodal polymer compositions may also cause waviness of the surface of articles produced thereof.

As a measure for the homogeneity in multimodal resins the ISO 18553 test can be applied. ISO 18553 originally is a method for rating pigmented spots, i.e. serves to determine how well pigments are dispersed in a polymer. As the dispersion of the pigment is dependent on the overall homogeneity of the polymer because inhomogeneities of the polymer are not coloured by the pigment, ISO 18553 can also be used as a measure for the homogeneity of a polymer by counting the non-coloured white spots and rating them according to the ISO 18553 scheme.

As a further measure for the homogeneity of a polymer, the white spot area test has been developed which to a far extent is based on the modified ISO 18553 white spot rating test as described in the above paragraph. This test is described in detail below.

It is known that homogeneity of a multimodal polymer composition can be improved by applying multiple compounding steps and/or particular compounding conditions to the resin coming from the reactor. These measures, however, have the disadvantage that they are associated with a significant increase in production costs for the composition.

It is, therefore, an object of the present invention to provide a multimodal polyethylene composition, in particular for the use as a pipe material, with improved homogeneity and thus improved properties, including improved surface properties. In particular, it is an object of the present invention to provide such a multimodal polyethylene composition having improved homogeneity directly after its production. At the same time, the composition should have good processing and good mechanical properties.

The present invention thus provides in a first embodiment a polyethylene composition comprising a base resin which comprises
(A) a first ethylene homo- or copolymer fraction, and
(B) a second ethylene homo- or copolymer fraction,
wherein fraction (A) has a lower molecular weight than fraction (B), the ratio of the MFR₂ of fraction (A) and the MFR₅ of the base resin being from 200 to 1500 and the composition has a white spot area of 1 % or below.

The homogeneity of the composition in terms of its white spot area is measured after a single compounding step as defined in detail below. Usually, the composition, measured after said single compounding step, has a white spot area of 0.01 to 1 %.

Preferably, the composition measured after said single compounding step, has a white spot area of 0.7 % or below, usually then 0.01 to 0.7 %

Preferably, the polyethylene composition, measured after a single compounding step, has a rating in the ISO 18553 white spot rating test of below 4.5, more preferably below 3.

In a second embodiment, the present invention provides a polyethylene composition comprising a base resin comprising
(A) a first ethylene homo- or copolymer fraction, and
(B) a second ethylene homo- or copolymer fraction,
wherein fraction (A) has a lower molecular weight than fraction (B), the ratio of the MFR₂ of fraction (A) and the MFR₅ of the base resin being from 200 to 1500 and the composition has a rating in the ISO 18553 white spot rating test of below 4.5.

As for the first embodiment, the measurement of the homogeneity in terms of the ISO 18553 white spot rating test is carried out after said single compounding step. Usually, the composition, after said single compounding step, has a rating in the ISO 18553 white spot rating test of 0.01 to below 4.5.

Preferably, the composition has a rating in the ISO 18553 white spot rating test of below 3, usually then between 0.01 and below 3.

The polyethylene compositions according to the invention have an improved microscopic mixing directly after their production, which is demonstrated by the fact that already after a single, usual compounding step a resin with an excellent homogeneity is obtained. Thus, the composition combines good mechanical with good surface properties and hence e.g. an improved impact strength with an improved appearance of the final product.

The term "molecular weight" as used herein denotes the weight average molecular weight M_{w}.

The term "base resin" means the entirety of polymeric components in the polyethylene composition according to the invention, usually making up at least 90 wt% of the total composition. Preferably, the base resin is consisting of fractions (A) and (B), optionally further comprising a prepolymer fraction in an amount of up to 20 wt%, more preferably up to 10 wt% and most preferably up to 5 wt% of the total base resin.

In addition to the base resin, usual additives for utilization with polyolefins, such as pigments (for example carbon black), stabilizers (antioxidant agents), antacids and/or anti-UVs, antistatic agents and utilization agents (such as processing aid agents) may be present in the polyethylene composition. Preferably, the amount of these additives is 10 wt% or below, further preferred 8 wt% or below, of the total composition.

Preferably, the composition comprises carbon black in an amount of 8 wt% or below, further preferred of 1 to 4 wt%, of the total composition.

Further preferred, the amount of additives different from carbon black is 1 wt% or less, more preferably 0.5 wt% or less.

Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the following, preferred features for both embodiments of the polyethylene composition according to the invention are described.

In the polyethylene composition according to the invention, fraction (A) preferably has an MFR₂ of at least 100 g/10min, more preferably at least 200 g/10min, and most preferably at least 300 g/10min.

Furthermore, in the polyethylene composition, fraction (A) preferably has an MFR₂ of 2000 g/10min or less, more preferably of 1500 g/10min or less, and most preferably of 1000 g/10min or less.

The base resin preferably has an MFR₅ of 1 g/10min or below, more preferably of 0.8 g/10min or below, more preferably of 0.6 g/10min or below, and most preferably 0.4 g/10min or below.

Furthermore, the base resin preferably has an MFR₅ of 0.01 g/10min or higher, more preferably of 0.05 g/10min or higher, and most preferably of 0.1 g/10min or higher.

Preferably, in the polyethylene composition according to the invention the weight ratio of fractions (A):(B) in the base resin is 30:70 to 70:30.

Furthermore, fraction (A) preferably is an ethylene homopolymer.

Fraction (A) preferably has a density of 950 kg/m³ or higher, more preferably 960 kg/m³ or higher.

Further preferred, the weight average molecular weight of fraction (A) is from 5,000 g/mol to 100,000 g/mol, more preferably is from 7,000 to 90,000 g/mol, and most preferably is from 10,000 to 80,000 g/mol.

In the polyethylene composition according to the invention fraction (B) preferably is a copolymer of ethylene with at least one further alpha-olefin comonomer.

Preferably, the alpha-olefin comonomer of fraction (B) is having from 4 to 8 carbon atoms, and more preferably is selected from 1-butene, 1-hexene, 4-methyl-1-pentene and 1-octene.

Fraction (B) preferably has a density of 954 kg/m³ or lower, more preferably of 952 kg/m³ or lower, still more preferably of 950 kg/m³ or lower, and most preferably of 940 kg/m³ or lower.

Base resin preferably has a density of lower than 960 kg/m³.

The weight average molecular weight of the base resin preferably is from 100,000 g/mol to 1,000,000 g/mol.

Preferably, the composition has a white spot area of 0.7 % or below, usually between 0.01 to 0.7 %

The polyethylene composition according to any the invention preferably has a shear thinning index SHI_{(2.7/210)} of at least 5, more preferably at least 10, still more preferably at least 20 and most preferably at least 40.

Furthermore, the polyethylene composition preferably has a shear thinning index SHI_{(2.7/210)} of 300 or less, more preferably 290 or less, still more preferably 220 or less and most preferably 200 or less.

The SHI is the ratio of the viscosity of the polyethylene composition at different shear stresses. In the present invention, the shear stresses at 2.7 kPa and 210 kPa are used for calculating the SHI_{2.7/210} which may serve as a measure of the broadness of the molecular weight distribution.

Furthermore, the polyethylene composition preferably has a viscosity at a shear stress of 2.7 kPa η_{(2.7)} of 10,000 to 500,000 Pas, more preferably of 50,000 to 400,000 Pas, and most preferably of 75,000 to 350,000 Pas.

Where herein preferred features of fractions (A) and/or (B) of the composition of the present invention are given, these values are generally valid for the cases in which they can be directly measured on the respective fraction, e.g. when the fraction is separately produced or produced in the first stage of a multistage process.

However, the base resin may also be and preferably is produced in a multistage process wherein e.g. fractions (A) and (B) are produced in subsequent stages. In such a case, the properties of the fractions produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

The polyethylene composition according the invention preferably is produced so that at least one of fractions (A) and (B), preferably (B), is produced in a gas-phase reaction.

Further preferred, one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

Further, the polyethylene base resin preferably is produced in a multistage process. Polymer compositions produced in such a process are also designated as "in-situ"-blends.

A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst.

Accordingly, it is preferred that fraction (A) and (B) of the polyethylene composition are produced in different stages of a multistage process.

Preferably, the multistage process comprises at least one gas phase stage in which, preferably, fraction (B) is produced.

Further preferred, fraction (B) is produced in a subsequent stage in the presence of fraction (A) which has been produced in a previous stage.

It is previously known to produce multimodal, in particular bimodal, olefin polymers, such as multimodal polyethylene, in a multistage process comprising two or more reactors connected in series. As an example of this prior art, mention may be made of EP 517 868, which is hereby incorporated by way of reference in its entirety, including all its preferred embodiments as described therein, as a preferred multistage process for the production of the polyethylene composition according to the invention.

Preferably, the main polymerisation stages of the multistage process are such as described in EP 517 868, i.e. the production of fractions (A) and (B) is carried out as a combination of slurry polymerisation for fraction (A)/gas-phase polymerisation for fraction (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total base resin is produced. The prepolymer is preferably an ethylene homopolymer (HDPE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

In the production of the base resin Ziegler-Natta (ZN) or metallocene catalysts are preferably used, more preferably Ziegler-Natta catalysts.

The catalyst may be supported, e.g. with conventional supports including silica, Al-containing supports and magnesium dichloride based supports. Preferably the catalyst is a ZN catalyst, more preferably the catalyst is non-silica supported ZN catalyst, and most preferably MgCl₂-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the two reactors, the different molecular weight distribution curves of these polymers together forming a molecular weight distribution curve having a broad maximum or two maxima, i.e. the end product is a bimodal polymer mixture.

It is preferred that the multimodal base resin of the polyethylene composition according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105°C, and most preferably is 92 to 100°C, and the temperature in the gas-phase reactor preferably is 70 to 105 °C, more preferably is 75 to 100°C, and most preferably is 82 to 97°C.

A chain-transfer agent, preferably hydrogen, is added as required to the reactors, and preferably 200 to 800 moles of H₂/kmoles of ethylene are added to the reactor, when the LMW fraction is produced in this reactor, and 0 to 50 moles of H₂/kmoles of ethylene are added to the gas phase reactor when this reactor is producing the HMW fraction.

Preferably, the base resin of the polyethylene composition is produced with a rate of at least 5 tons/h, more preferably at least 10 ton/h, and most preferably at least 15 tons/h.

The composition of the invention preferably if produced in a process comprising compounding step, wherein the composition of the base resin, i.e. the blend, which is typically obtained as a base resin powder from the reactor, is extruded in an extruder and then pelletised to polymer pellets in a manner known in the art.

Optionally, additives or other polymer components can be added to the composition during the compounding step in the amount as described above. Preferably, the composition of the invention obtained from the reactor is compounded in the extruder together with additives in a manner known in the art.

The extruder may be e.g. any conventionally used extruder. As an example of an extruder for the present compounding step may be those as supplied by Japan steel works, Kobe steel or Farrel-Pomini, e.g. JSW 460P.

In one embodiment, the extrusion step is carried out using production rates of at least 400, at least 500, at least 1000 kg/h may be used in said compounding step.

In another embodiment the compounding step can be effected with production rate of that least 5 tons/h, preferably at least 15 tons/h, more preferably at least 20 or 25 tons/h or even at least 30 or more tons/h, such as at least 50, such 1-50, preferably 5-40, 10-50, in some embodiments 10-25 tons/h.

Alternatively, production rates at least 20 tons/h, preferably at least 25 tons/h, even at least 30 tons/h, e.g. 25-40 tons/h may be desired during the compounding step.

The present multimodal polyethylene composition of the invention enables such production rates within the property window of the invention, i.e. with various property combinations of MFR's of the fractions and of final base resin variations together with excellent homogeneity, just to mention few.

Preferably, in said extrusion step, a total SEI (specific energy input) of the extruder may be at least 150, 150-400, 200-350, 200-300 kWh/ton.

It is known that the temperature of the polymer melt may vary in the extruder, the highest (max) melt temperature of the composition in the extruder during the extrusion step is typically more than 150°C, suitably between 200 to 350°C, preferably 250 to 310°C, more pref. 250 to 300°C.

The benefit of the invention is that an excellent homogeneity can be obtained without extensive mixing, already by effecting once the compounding step, e.g. the preferable extrusion with production rates as defined above, and additionally, together with the high level homogeneity desirable polymer properties can be achieved/maintained.

Furthermore, the present invention relates to a process for the production of a polyethylene composition as described hereinbefore comprising the steps of
i) polymerising ethylene monomers, and optionally one or more alpha-olefin comonomers, in the presence of a Ziegler-Natta catalyst to obtain a first ethylene homo- or copolymer fraction (A)
ii) polymerising ethylene monomers, and optionally one or more alpha-olefin comonomers, in the presence of a Ziegler-Natta catalyst to obtain a second ethylene homo- or copolymer fraction (B) having a higher average molecular weight than fraction (A)
wherein the second polymerisation step is carried out in the presence of the polymerization product of the first step.

Preferably, the polymerization to obtain fraction (A) is carried out in a loop reactor.

Furthermore, the polymerization to obtain fraction (B) is preferably carried out in a gas phase reactor.

The first polymerisation step preferably is preceded by a prepolymerisation step in which preferably at most 20 wt%, more preferably at most 10 wt% and still more preferably at most 5 wt% of the total base resin is produced.

Still further, the present invention relates to an article, preferably a pipe, comprising a polyethylene composition as described above or obtainable by a process as described above, and to the use of such a polyethylene composition for the production of an article, preferably a pipe.

### Experimental and Examples

### 1. Definitions and measurement methods

### a) Molecular weight

The weight average molecular weight M_{w} and the molecular weight distribution (MWD = M_{w}/Mₙ wherein Mₙ is the number average molecular weight and M_{w} is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: 9.54*10⁻⁵ and a: 0.725 for PS, and K: 3.92*10⁻⁴ and a: 0.725 for PE). The ratio of M_{w} and Mₙ is a measure of the broadness of the distribution, since each is influenced by the opposite end of the "population".

### b) Density

Density is measured according to ISO 1872, Annex A.

### c) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (MFR₂), 5 kg (MFR₅) or 21.6 kg (MFR₂₁).

The quantity FRR (flow rate ratio) is an indication of molecular weight distribution and denotes the ratio of flow rates at different loadings. Thus, FRR_{21/5} denotes the value of MFR₂₁/MFR₅.

### d) Rheological parameters

Rheological parameters such as Shear Thinning Index SHI and Viscosity are determined by using a rheometer, preferably a Rheometrics Phisica MCR 300 Rheometer. The definition and measurement conditions are described in detail on page 8 line 29 to page 11, line 25 of WO 00/22040.

### e) Measurement of Homogeneity

The polymer composition according to the present invention has an improved homogeneity directly after its production in the polymerisation reactor. However, as, first, homogeneity is usually measured only on a compounded composition, and, second, the way in which compounding is carried out has a decisive influence on the homogeneity of the compounded composition, it is important that the compounding conditions to which the composition is subjected and the compounding equipment used are/is clearly defined before homogeneity of the composition is determined, e.g. in terms of the white spot area test or the modified ISO 18553 white spot rating test as described below.

Accordingly, homogeneity of the compositions described herein is determined after a single compounding step only, which is to be carried out as follows:

The base resin powder coming from the reactor is transferred, e.g. via intermediate holding tanks (50-250 tons), to the compounding unit without extra handling like grinding or cooling or similar processes.

The powder is then poured into the inlet of the compounder together with the appropriate amounts of additives. The additives can be, typically, stearates, antioxidants, UV-stabilisers, or pigments/carbon blacks. The additives can be added as a pure component or as a master batch with a PE carrier.

The base resin plus additives are then passed through the compounding unit only once.

No material that has passed the compounder once is allowed to be transferred back to the inlet of the compounder for further work nor is it allowed to pass the compounded material further to a second processing unit.

The idea of the single compounding step is that a reactor powder is allowed *only one single pass* through the compounding unit.

The equipment to be used for the single compounding step is a twin-screw extruder like counter rotating equipment as supplied by Japan steel works, e.g. CIM JSW 460P or equivalent equipment.

Typical compounding conditions in the single compounding step used in CIM JSW 460P having a screw diameter of 460 mm are:

| | |
|---|---|
| production: | 25 to 30tons/h |
| mixer specific energy input (SEI): | 260 kWh/ton |
| gear pump SEI: | 19 kWh/ton |
| Temp. before gear pump: | 290 °C |
| Temp. after gear pump: | 300 °C |
| suction pressure gear pump: | 1.6 bar |
| mixer speed: | 400 rpm |

The white spot area of the once compounded composition is determined at least partly following ISO 18553, as follows:

A sample of a composition (including a pigment to make the inhomogeneities visible, e.g. carbon black in an amount of around 2.5 wt%) which is obtained after a single compounding step as described above, is analysed by first obtaining 6 microtome cuts of 6 different parts of the sample (thickness < 60 micrometer, diameter 3 to 5 mm).

The cuts are evaluated at a magnification of 100, and the size, i.e. the part of the surface, of the non-coloured inclusions ("white spots", agglomerates, particles) on a total surface of each cut of 0.7 mm² is determined. All white spots with a diameter > 5 microns are counted. The "white spot area" is then expressed as the averaged fraction of the white spots on the total surface of the sample cut.

### f) Measurement of homogeneity - Rating in modified ISO 18553 white spot rating test

In addition to the white spot area test, homogeneity complementary is determined according to the modified ISO 18553 white spot rating test. In this test, inhomogeneities of the composition present after a single compounding step as described above, which appear as white spots, are determined and rated according to the rating scheme given in ISO 18553. The lower the composition is rated in this test, the better is the homogeneity of the composition.

### 2. Polyethylene compositions

Production of polyethylene compositions base resins was performed in a multistage reaction comprising a first polymerisation stage in slurry in a 50 dm³ loop reactor, followed by transferring the slurry to a 500 dm³ loop reactor wherein polymerisation was continued in slurry to produce the low molecular weight component (fraction (A)), and a second polymerisation in a gas phase reactor in the presence of the product from the second loop reactor to produce the comonomer containing high molecular weight component (fraction (B)). As comonomer, butene-1 has been used.

As a catalyst, *Lynx 200* available from Engelhard Corporation Pasadena, U.S.A. has been used for all examples according to the invention.

In comparative example 1, a catalyst prepared according to example 1 of EP 0 688 794 has been used.

The polymerisation conditions applied and the properties of the polymers obtained are listed in Table 1.

After production of fraction (B) (and hence the complete base resin), the obtained polymer powder was transferred to an extruder where it was compounded together with 2.5 wt% carbon black according to the procedure described under item e) above.

**Table 1:**

| | Example 1 | Example 2 | Comp. Ex. 1 |
|---|---|---|---|
| **Prepolymeriser Conditions/Product Properties** | | | |
| Temp. °C | 40 | 40 | |
| MFR₂ [g/10min] | | 10 | 40 |
| MFR₅ [g/10min] | 1.46 | | |
| Amount [wt%] | 2 | 2 | 1.5 |
| | | | |

| **Loop Reactor Conditions/Product Properties (fraction (A))** | | | |
|---|---|---|---|
| Temp. [°C] | 95 | 95 | 95 |
| Pressure [bar] | 56 | 56 | 58 |
| C₂ concentr. [mol%] | 1.8 | 1.8 | |
| H₂/C₂ [mol/kmol] | 840 | 760 | 381 |
| Amount [wt%] | 48 | 48 | 47 |
| MFR₂ [g/10min] | 304 | 342 | 364 |
| Density [kg/m³] | >970 | >970 | > 970 |
| | | | |

| **Gas Phase Reactor Conditions/Product Properties (base resin)** | | | |
|---|---|---|---|
| Temp. [°C] | 85 | 85 | 85 |
| Pressure [bar] | 20 | 20 | 20 |
| C₂ concentr. [mol%] | 4 | 4 | |
| H2/C2 [mol/kmol] | 33 | 34 | 5 |
| comonomer/C₂ ratio [mol/kmol] | 108 (butene-1) | 99 (butene-1) | 72 (butene-1) |
| MFR₅ [g/10min] | 0.23 | 0.26 | 0.21 |
| MFR₂₁ [g/10min] | 7.6 | 6.9 | 7.1 |
| FRR_{21/5} | 33 | 31 | 34 |
| Density [kg/m³] | 948 | 948 | 950 |
| Amount [wt%] | 50 | 50 | 51 |
| | | | |

| **Compounded Composition** | | | |
|---|---|---|---|
| MFR₅ [g/10min] | 0.26 | 0.23 | 0.25 |
| MFR₂₁ [g/10min] | 9.2 | 7.6 | 9.05 |
| FRR_{21/5} | 35.1 | 33.5 | 35.9 |
| Density [kg/m³] | 958 | 959 | 960 |
| White spot ISO 18553 rating test | 2.7 | 4.2 | 6.1 |
| White Spot Area [%] | 0.5 | 0.1 | 2.4 |
| SHI_{(2.7/210)} | 52.5 | 47.4 | 56.9 |
| Eta_{2.7} [kPas] | 251 | 260 | 247 |
| Eta₇₄₇ [kPas] | 487 | 451 | 464 |
| M_{w} [kD] | | 263 | 283 |
| Mₙ [kD] | | 6.03 | 6.38 |
| MWD | | 43,6 | 44.4 |

## Claims

1. A polyethylene composition comprising a base resin which comprises
(A) a first ethylene homo- or copolymer fraction, and
(B) a second ethylene homo- or copolymer fraction,
wherein fraction (A) has a lower weight average molecular weight than fraction (B), the ratio of the MFR₂ of fraction (A) and the MFR₅ of the base resin being from 200 to 1500, and the composition has a white spot area of 1 % or below.

2. A polyethylene composition comprising a base resin comprising
(A) a first ethylene homo- or copolymer fraction, and
(B) a second ethylene homo- or copolymer fraction,
wherein fraction (A) has a lower weight average molecular weight than fraction (B), the ratio of the MFR₂ of fraction (A) and the MFR₅ of the base resin being from 200 to 1500, and the composition has a rating in the ISO 18553 white spot rating test of below 4.5.

3. A polyethylene composition according to claim 1 wherein the composition has a rating in the ISO 18553 white spot rating test of below 4.5.

4. A polyethylene composition according to claims 1, 2 or 3 wherein fraction (A) has an MFR₂ of 100 g/10min or more.

5. A polyethylene composition according to any of the preceding claims wherein the base resin has an MFR₅ of 1 g/10min or below.

6. A polyethylene composition according to any of the preceding claims wherein the weight ratio of fractions (A):(B) in the base resin is 30:70 to 70:30.

7. A polyethylene composition according to any of the preceding claims wherein the MFR₅ of the composition is 0.6 g/10min or below.

8. A polyethylene composition according to any of the preceding claims wherein fraction (A) is an ethylene homopolymer.

9. A polyethylene composition according to any of the preceding claims wherein fraction (A) has a density of 950 kg/m³ or higher.

10. A polyethylene composition according to any of the preceding claims wherein fraction (B) is a copolymer of ethylene with at least one further alpha-olefin comonomer.

11. A polyethylene composition according to any of the preceding claims wherein fraction (B) has a density of lower than 954 kg/m³.

12. A polyethylene composition according to any of the preceding claims wherein the composition has a SHI_{(2.7/210)} of 5 to 300.

13. A polyethylene composition according to any of the preceding claims wherein the base resin has been produced in a multistage process.

14. A process for the production of a polyethylene composition according to any of the preceding claims comprising the steps of
i) polymerising ethylene monomers, and optionally one or more alpha-olefin comonomers, in the presence of a Ziegler-Natta catalyst to obtain a first ethylene homo- or copolymer fraction (A)
ii) polymerising ethylene monomers, and optionally one or more alpha-olefin comonomers, in the presence of a Ziegler-Natta catalyst to obtain a second ethylene homo- or copolymer fraction (B) having a higher weight average molecular weight than fraction (A)
wherein the second polymerisation step is carried out in the presence of the polymerization product of the first step.

15. A process according to claim 14 wherein the polymerization to obtain fraction (A) is carried out in a slurry reactor.

16. A process according to claims 14 or 15 wherein the polymerization to obtain fraction (B) is carried out in a gas phase reactor.

17. An article comprising a polyethylene composition according to any of claims 1 to 13.

18. An article according to claim 17 wherein the article is a pipe.

19. Use of a polyethylene composition according to any of claims 1 to 13 for the production of an article.

20. Use according to claim 19 wherein the article is a pipe.

## Patentansprüche

1. Polyethylenzusammensetzung, umfassend ein Grundharz, welches umfaßt:
(A) einen ersten Anteil aus einen Ethylenhomo- oder -copolymer und
(B) einen zweiten Anteil aus einem Ethylenhomo- oder -copolymer,
wobei der Anteil (A) ein geringeres Gewichtsmittel des Molekulargewichts als der Anteil (B) aufweist, das Verhältnis zwischen dem MFR₂-Wert des Anteils (A) und dem MFR₅-Wert des Grundharzes 200 bis 1500 beträgt und die Zusammensetzung eine Fläche der weißen Punkte von 1 % oder weniger aufweist.

2. Polyethylenzusammensetzung, umfassend ein Grundharz, welches umfaßt:
(A) einen ersten Anteil aus einen Ethylenhomo- oder -copolymer und
(B) einen zweiten Anteil aus einem Ethylenhomo- oder -copolymer,
wobei der Anteil (A) ein geringeres Gewichtsmittel des Molekulargewichts als der Anteil (B) aufweist, das Verhältnis zwischen dem MFR₂-Wert des Anteils (A) und dem MFR₅-Wert des Grundharzes 200 bis 1500 beträgt und die Zusammensetzung bei einem Bewertungstest der weißen Punkte gemäß ISO 18553 eine Bewertung von weniger als 4,5 aufweist.

3. Polyethylenzusammensetzung nach Anspruch 1, wobei die Zusammensetzung beim Bewertungstest der weißen Punkte gemäß ISO 18553 eine Bewertung von weniger als 4,5 aufweist.

4. Polyethylenzusammensetzung nach den Ansprüchen 1, 2, oder 3, wobei der Anteil (A) einen MFR₂-Wert von 100 g/10 min oder mehr aufweist.

5. Polyethylenzusammensetzung nach einem der vorstehenden Ansprüche, wobei das Grundharz einen MFR₅-Wert von 1 g/10 min oder weniger aufweist.

6. Polyethylenzusammensetzung nach einem der vorstehenden Ansprüche, wobei das Gewichtsverhältnis der Anteile (A):(B) im Grundharz 30:70 bis 70:30 beträgt.

7. Polyethylenzusammensetzung nach einem der vorstehenden Ansprüche, wobei der MFR₅-Wert der Zusammensetzung 0,6 g/10 min oder weniger beträgt.

8. Polyethylenzusammensetzung nach einem der vorstehenden Ansprüche, wobei der Anteil (A) ein Ethylenhomopolymer ist.

9. Polyethylenzusammensetzung nach einem der vorstehenden Ansprüche, wobei der Anteil (A) eine Dichte von 950 kg/m³ oder mehr aufweist.

10. Polyethylenzusammensetzung nach einem der vorstehenden Ansprüche, wobei der Anteil (B) ein Copolymer von Ethylen mit zumindest einem weiteren Comonomer aus einem α-Olefin ist.

11. Polyethylenzusammensetzung nach einem der vorstehenden Ansprüche, wobei der Anteil (B) eine Dichte von weniger als 954 kg/m³ aufweist.

12. Polyethylenzusammensetzung nach einem der vorstehenden Ansprüche, wobei die Zusammensetzung einen Wert für SHI_{(2,7/210)} von 5 bis 300 aufweist.

13. Polyethylenzusammensetzung nach einem der vorstehenden Ansprüche, wobei das Grundharz in einem mehrstufigen Verfahren hergestellt worden ist.

14. Verfahren zur Herstellung einer Polyethylenzusammensetzung nach einem der vorstehenden Ansprüche, das die folgenden Schritte aufweist:
i) Polymerisieren von Ethylenmonomeren und gegebenenfalls einem oder mehreren Comonomeren aus einem α-Olefin in Gegenwart eines Ziegler-Natta-Katalysators, so daß ein erster Anteil (A) aus einem Ethylenhomo- oder -copolymer erhalten wird,
(ii) Polymerisieren von Ethylenmonomeren und gegebenenfalls einem oder mehreren Comonomeren aus einem α-Olefin in Gegenwart eines Ziegler-Natta-Katalysators, so daß ein zweiter Anteil (B) aus einem Ethylenhomo- oder -copolymer mit einem höheren Gewichtsmittel des Molekulargewichts als der Anteil (A) erhalten wird,
wobei der zweite Polymerisationsschritt in Gegenwart des Polymerisationsproduktes vom ersten Schritt durchgeführt wird.

15. Verfahren nach Anspruch 14, wobei die Polymerisation zur Gewinnung des Anteils (A) in einem Suspensionsreaktor durchgeführt wird.

16. Verfahren nach Anspruch 14 oder 15, wobei die Polymerisation zur Gewinnung des Anteils (B) in einem Gasphasenreaktor durchgeführt wird.

17. Gegenstand, der eine Polyethylenzusammensetzung nach einem der Ansprüche 1 bis 13 umfaßt.

18. Gegenstand nach Anspruch 17, wobei der Gegenstand ein Rohr ist.

19. Verwendung einer Polyethylenzusammensetzung nach einem der Ansprüche 1 bis 13 für die Herstellung eines Gegenstandes.

20. Verwendung nach Anspruch 19, wobei der Gegenstand ein Rohr ist.

## Revendications

1. Composition de polyéthylène comprenant une résine de base qui comprend :
(A) une première fraction d'homo ou de copolymère d'éthylène, et
(B) une deuxième fraction d'homo ou de copolymère d'éthylène,
dans laquelle la fraction (A) possède un poids moléculaire moyen en poids inférieur à celui de la fraction (B), le rapport du MFR₂ de la fraction (A) et du MFR₅ de la résine de base étant de 200 à 1500, et la composition ayant un domaine de point blanc de 1 % ou inférieur.

2. Composition de polyéthylène comprenant une résine de base comprenant
(A) une première fraction d'homo ou de copolymère d'éthylène, et
(B) une deuxième fraction d'homo ou de copolymère d'éthylène,
dans laquelle la fraction (A) possède un poids moléculaire moyen en poids inférieur à celui de la fraction (B), le rapport du MFR₂ de la fraction (A) et du MFR₅ de la résine de base étant de 200 à 1500, et la composition ayant une valeur d'essai d'étalonnage de point blanc ISO 18553 inférieure à 4,5.

3. Composition de polyéthylène selon la revendication 1, dans laquelle la composition présente une valeur d'essai d'étalonnage de point blanc ISO 18553 inférieure à 4,5.

4. Composition de polyéthylène selon les revendications 1, 2 ou 3 dans laquelle la fraction (A) présente un MFR₂ de 100 g/10 min ou supérieur.

5. Composition de polyéthylène selon l'une quelconque des revendications précédentes, dans laquelle la résine de base présente un MFR₅ de 1 g/10 min ou inférieur.

6. Composition de polyéthylène selon l'une quelconque des revendications précédentes, dans laquelle le rapport en poids des fractions (A) : (B) dans la résine de base est de 30 : 70 à 70 : 30.

7. Composition de polyéthylène selon l'une quelconque des revendications précédentes, dans laquelle le MFR₅ de la composition est de 0,6 g/ 10 min ou inférieur.

8. Composition de polyéthylène selon l'une quelconque des revendications précédentes, dans laquelle la fraction (A) est un homopolymère d'éthylène.

9. Composition de polyéthylène selon l'une quelconque des revendications précédentes, dans laquelle la fraction (A) possède une masse volumique de 950 kg/m³ ou supérieure.

10. Composition de polyéthylène selon l'une quelconque des revendications précédentes, dans laquelle la fraction (B) est un copolymère d'éthylène avec au moins un autre comonomère d'alpha-oléfine.

11. Composition de polyéthylène selon l'une quelconque des revendications précédentes, dans laquelle la fraction (B) possède une masse volumique inférieure à 954 kg/m³.

12. Composition de polyéthylène selon l'une quelconque des revendications précédentes, dans laquelle la composition présente un SHI_{(2,7/210)} de 5 à 300.

13. Composition de polyéthylène selon l'une quelconque des revendications précédentes, dans laquelle la résine de base a été produite dans un procédé à étages multiples.

14. Procédé pour la production d'une composition de polyéthylène selon l'une quelconque des revendications précédentes comprenant les étapes consistant à
i) polymériser des monomères d'éthylène, et éventuellement un ou plusieurs comonomères d'alpha-oléfine, en présence d'un catalyseur de Ziegler-Natta pour obtenir une première fraction d'homo ou de copolymère d'éthylène (A)
ii) polymériser des monomères d'éthylène, et éventuellement un ou plusieurs comonomères d'alpha-oléfine, en présence d'un catalyseur de Ziegler-Natta pour obtenir une deuxième fraction d'homo ou de copolymère d'éthylène (B) ayant un poids moléculaire moyen en poids supérieur à celui de la fraction (A)
où la deuxième étape de polymérisation est réalisée en présence du produit de polymérisation de la première étape.

15. Procédé selon la revendication 14, dans lequel la polymérisation pour obtenir la fraction (A) est réalisée dans un réacteur en suspension.

16. Procédé selon les revendications 14 ou 15, dans lequel la polymérisation pour obtenir la fraction (B) est réalisé dans un réacteur en phase gazeuse.

17. Article comprenant une composition de polyéthylène selon l'une quelconque des revendications 1 à 13.

18. Article selon la revendication 17, dans lequel l'article est une conduite.

19. Utilisation d'une composition de polyéthylène selon l'une quelconque des revendications 1 à 13 pour la production d'un article.

20. Utilisation selon la revendication 19, dans laquelle l'article est une conduite.
